# EUROPÄISCHE PATENTSCHRIFT

(11) **EP 4 143 481 B1**
(45) Veröffentlichungstag und Bekanntmachung des Hinweises auf die Patenterteilung: **27.05.2026**
(21) Anmeldenummer: 21737390.1
(22) Anmeldetag: 25.06.2021
(51) Int. Cl.: F21V 23/00, G03B 15/02, F21W 131/406, F21Y 105/16, F21Y 107/70, F21Y 115/10

(54) **BELEUCHTUNGSEINHEIT MIT FLEXIBLEM FLÄCHENBELEUCHTUNGSKÖRPER**
LIGHTING UNIT HAVING A FLEXIBLE SURFACE-LIGHTING ELEMENT
UNITÉ D'ÉCLAIRAGE À CORPS D'ÉCLAIRAGE PLAN SOUPLE

(30) Priorität: 26.06.2020 DE 102020116917
(43) Veröffentlichungstag der Anmeldung: 08.03.2023
(73) Patentinhaber: Carpetlight GmbH, 22763 Hamburg (DE)
(72) Erfinder: SCHMIDT ZUR NEDDEN, Götz, 22391 Hamburg (DE); SCHMIDT ZUR NEDDEN, Laura, 22391 Hamburg (DE); BASTIAN, Niklas, 22147 Hamburg (DE); CHROST, Sebastian, 22926 Ahrensburg (DE); MEYER, Daniela, 22359 Hamburg (DE)
(74) Vertreter: Seemann & Partner Patentanwälte mbB
(86) Internationale Anmeldenummer: PCT/EP2021/067465
(87) Internationale Veröffentlichungsnummer: WO 2021/260167

(56) Entgegenhaltungen:
- WO-A1-2020/010243
- CN-A- 108 205 987
- DE-B4- 102014 206 882
- US-A1- 2020 149 714
- US-B2- 10 595 469

## Beschreibung

Die Erfindung betrifft eine Beleuchtungseinheit mit einem flexiblen Flächenbeleuchtungskörper, der eine flächig verteilte Mehrzahl von Leuchtmitteln auf einem flächigen Trägermaterial aufweist, das einen, insbesondere textilbasierten, flexiblen flächigen Schaltungsträger umfasst, der auf einer Vorderseite mit der Mehrzahl von Leuchtmitteln bestückt ist, die durch im oder am Schaltungsträger ausgebildete elektrische Leitungen verschaltet sind.

Entsprechende Flächenbeleuchtungskörper werden unter anderem von der Anmelderin unter der Bezeichnung Carpetlight vertrieben und sind unter anderem im Deutschen Patent DE 10 2014 206 882 B4 beschrieben worden. Sie sind für verschiedene Anwendungen konzipiert, beispielsweise für die flächige Ausleuchtung im Bereich der Fotografie, der Film- und Fernsehaufnahmen. Besonders in letzteren Bereichen ist eine kontinuierliche Beleuchtung mit hohen Leuchtstärken erforderlich, die in den meisten Fällen durch Systeme aus Scheinwerfern, Reflektoren und Diffusoren erreicht wird. Um wechselnde Szenen zu beleuchten, müssen die verwendeten Beleuchtungssystemkomponenten flexibel kombinierbar, platzierbar und ausrichtbar sein. Dazu wird in DE 10 2014 206 882 B4 vorgeschlagen, einen flexiblen Flächenbeleuchtungskörper zur Verfügung zu stellen, der eine flächig verteilte Mehrzahl von Leuchtmitteln auf einem flächigen Trägermaterial aufweist, das wenigstens zwei Schichten aufweist, wobei eine erste Schicht als textilbasierter flexibler flächiger Schaltungsträger ausgebildet ist, der auf einer Vorderseite mit der Mehrzahl von Leuchtmitteln bestückt ist, die durch im oder am Schaltungsträger ausgebildete elektrische Leitungen verschaltet sind, wobei eine zweite Schicht als flexible flächige Kühlschicht ausgebildet ist und mit dem Schaltungsträger an dessen der Vorderseite gegenüberliegenden Rückseite verbunden ist.

Ein solcher Flächenbeleuchtungskörper stellt, vereinfacht ausgedrückt, ein selbstleuchtendes Tuch dar, das biegbar, rollbar, faltbar, drehbar und knautschbar ist, und das eine über die Fläche verteilte Leuchtkraft hat, die beispielsweise zur Beleuchtung einer Szene oder eines Teils einer Szene ausreicht. Entsprechende "Tücher" bzw. flexible Flächenbeleuchtungskörper lassen sich in beliebigen Größen herstellen und sind daher einfach zu konfektionieren. Dadurch, dass sie in ihrer Flexibilität und Flächenhaftigkeit bekannten Reflektoren und Diffusoren entsprechen, sind sie geeignet, die bekannten Kombinationen aus Scheinwerfer, Reflektoren und Diffusoren zu ersetzen. Sie kommen auch mit einer geringeren Leuchtstärke aus, da ihre Leuchtstärke vollständig zur Beleuchtung einer gegebenen Szenerie zur Verfügung steht und nicht, wie bei den herkömmlichen Scheinwerfersystemen, nur unvollständig zur Szenerie hin abgelenkt und diffusiert wird. Dies führt auch zu einer Verringerung der entstehenden Abwärme.

WO 2020/010243 A1 offenbart ein flexibles Beleuchtungspaneel, das ein Substrat mit einem Leitermuster und Öffnungen umfasst, elektrisch mit dem Leitermuster verbundene Festkörper-Lichtemitter, eine lichtdurchlässige erste Schutzschicht, die mindestens einen Teil einer ersten Oberfläche des Substrats bedeckt, und eine zweite Schutzschicht, die mindestens einen Teil einer zweiten Oberfläche des Substrats bedeckt. Die erste und die zweite Schutzschicht sind durch die Öffnungen und den Umfang des Substrats miteinander verbunden, um das Halten der lichtdurchlässigen ersten Schutzschicht und der zweiten Schutzschicht gegenüber der ersten bzw. zweiten Oberfläche des Substrats zu unterstützen. Eine oder beide der ersten und zweiten Schutzschichten kapseln die Festkörper-Lichtemitter ein. Das Leuchtpaneel ist flexibel, um zu ermöglichen, dass gegenüberliegende Kanten des Leuchtpaneels aufeinander gefaltet werden und/oder das Leuchtpaneel in eine röhrenförmige Konfiguration gerollt werden kann.

In US 2020/0149714 A1 wird ein Beleuchtungssystem mit Verbindungen für Signal- und Leistungsübertragung vorgestellt. Dabei können mehrere untereinander verbindbare flexible Lichtpaneele mit jeweils mehreren LED-Elementen Verwendung finden, wobei jeweils Verbindungselemente zum Einsatz kommen, die eine gewisse Zugentlastung verwirklichen, beispielsweise Druckknöpfe.

CN 108205987 A offenbart ein LED Softboard für ein Werbungs-Display-Rack. Dazu wird in einem Gestell an der Vorderseite ein von hinten beleuchtetes Netz aufgespannt. Die Hintergrundbeleuchtung wird von einem LED-Panel mit einer Vielzahl von LEDs gebildet. Dieses LED-Panel ist flexibel und wird ebenfalls in den Rahmen eingespannt.

Aus US 2016/0091185 A1 ist eine leichte, tragbare und flexible Lichtbank mit LED-Streifen, die an einem Stoff befestigt sind, und die ein Klettbefestigungssystem zur Befestigung an verschiedenen Gegenständen aufweist, bekannt. Die Lichtbank kann aufgerollt und gefaltet werden. Batterien können auf der Rückseite der Lichtbank abnehmbar angebracht werden.

Gegenüber diesem Stand der Technik besteht die der Erfindung zugrunde liegende Aufgabe darin, eine Beleuchtungseinheit zur Verfügung zu stellen, die einen flexibleren Einsatz als bisher erlaubt.

Diese Aufgabe wird durch eine Beleuchtungseinheit gelöst, die einen flexiblen Flächenbeleuchtungskörper, der eine flächig verteilte Mehrzahl von Leuchtmitteln auf einem flächigen Trägermaterial aufweist, das einen, insbesondere textilbasierten, flexiblen flächigen Schaltungsträger umfasst, der auf einer Vorderseite mit der Mehrzahl von Leuchtmitteln bestückt ist, die durch im oder am Schaltungsträger ausgebildete elektrische Leitungen verschaltet sind, und eine Steuereinheit umfasst, die zur Stromversorgung und Steuerung der Mehrzahl von Leuchtmitteln ausgebildet ist, wobei die Steuereinheit ein Gehäuse umfasst, das an einem Rand des Flächenbeleuchtungskörpers angeordnet und mit diesem mechanisch verbunden ist, wobei der Rand des Flächenbeleuchtungskörpers in dem Gehäuse der Steuereinheit abschnittsweise aufgenommen ist, wobei das Gehäuse elektrische und elektronische Komponenten und Leitungen, die mit den elektrischen Leitungen des Flächenbeleuchtungskörpers verbunden sind, und ein Zugentlastungsmittel umfasst, das Zugspannungen zwischen dem Gehäuse der Steuereinheit einerseits und dem Flächenbeleuchtungskörper andererseits aufnimmt und von den elektrischen Verbindungen zwischen der Steuereinheit und dem Flächenbeleuchtungskörper fernhält, wobei das Zugentlastungsmittel ausgebildet ist, eine zugfeste Verbindung zwischen dem Material des Flächenbeleuchtungskörpers und dem Gehäuse herzustellen, wobei die Beleuchtungseinheit dadurch weitergebildet ist, dass das Zugentlastungsmittel als Klemmeinrichtung, als Reihe von Zugaufnahmezapfen, die durch eine passend zur Anordnung der Zugaufnahmezapfen ausgestaltete Reihe von Ösen in dem Flächenbeleuchtungskörper geführt sind, als Spacer mit Innengewinde und Schrauben, die in die Innengewinde der Spacer eingeschraubt oder einschraubbar sind, oder als Abdeckung, die auf oder an das Gehäuse angeschraubt oder anschraubbar bzw. angeklemmt oder anklemmbar ist, ausgebildet ist.

Grundlage der Erfindung ist der Erfindungsgedanke, den Flächenbeleuchtungskörper und die Steuereinheit in eine Beleuchtungseinheit zu integrieren und diese durch eine zugfeste Anbindung des Flächenbeleuchtungskörpers an das Gehäuse der Steuereinheit robust und ohne externe Kabel auszugestalten. Eine solche Einheit kann in einer Vielzahl von Situationen eingesetzt werden. So kann die Beleuchtungseinheit im eingerollten oder eingewickelten Zustand transportiert werden und dort, wo sie gebraucht wird, ausgerollt und aufgehängt, angeklettet, ausgelegt etc. werden, je nach den Gegebenheiten der Situation und den Befestigungsmöglichkeiten, die vorhanden sind. Eine externe Stromversorgung ist nicht notwendig, wenn diese bereits in die Steuereinheit integriert ist. Allerdings kann die Steuereinheit auch unabhängig davon, ob eine Stromversorgung integriert ist, einen Anschluss für eine externe Stromversorgung aufweisen.

Anwendungsfälle für den Einsatz der erfindungsgemäßen Beleuchtungseinheit wäre beispielsweise die Ausleuchtung von Zelten, auch Behelfszelten im militärischen Bereich, im Katastrophenschutz oder in mobilen medizinischen Einrichtungen, im polizeilichen Einsatz zur Ausleuchtung von Unfallstellen, sowie für den privaten Einsatz, ebenso wie für Fotografen, die außerhalb ihrer Studios eine mobile flächige Beleuchtung benötigen, die schnell aufzubauen ist. Diese Auflistung ist nicht abschließend.

Vorzugsweise ist der Schaltungsträger textilbasiert, insbesondere auf Kunstfaserbasis, oder alternativ als flexible Folie ausgebildet, insbesondere polymerbasiert, insbesondere Polyimid oder Polyurethan. Diese Werkstoffe bieten bei guter Widerstandsfähigkeit unter anderem eine hohe Flexibilität und niedriges Gewicht.

Das Zugentlastungsmittel ist erfindungsgemäß ausgebildet, eine zugfeste Verbindung zwischen dem Material des Flächenbeleuchtungskörpers und dem Gehäuse herzustellen. Dies bedeutet, dass eine unmittelbare zugfeste Anbindung zwischen dem Flächenbeleuchtungskörper und dem Gehäuse besteht

Ebenfalls erfindungsgemäß ist das Zugentlastungsmittel als Klemmeinrichtung, als Reihe von Zugaufnahmezapfen, die durch eine passend zur Anordnung der Zugaufnahmezapfen ausgestaltete Reihe von Ösen in dem Flächenbeleuchtungskörper geführt sind, oder als Spacer mit Innengewinde und Schrauben, die in die Innengewinde der Spacer eingeschraubt oder einschraubbar sind, oder als Abdeckung ausgebildet, die auf oder an das Gehäuse angeschraubt oder anschraubbar bzw. angeklemmt oder anklemmbar ist. In Ausführungsformen ist das Zugentlastungsmittel mit einer am Flächenbeleuchtungskörper angebrachten Stoppleiste ausgebildet, die ausgebildet ist, ein Herausziehen des Flächenbeleuchtungskörpers aus der Abdeckung zu verhindern. Vorzugsweise ist das Trägermaterial im Bereich der Ösen oder der Spacer verstärkt ausgeführt, insbesondere durch eine Doppellage des flexiblen flächigen Schaltungsträgers. Eine solche Klemmeinrichtung kann abschnittsweise den Flächenbeleuchtungskörper von einer Seite oder von zwei Seiten erfassen und mit einer rutschhindernden Oberfläche oder Profilierung ausgestattet sein, beispielsweise mit einer Gummierung oder einem widerhakenden oder geriffelten Profil. Eine einfachere, jedoch ebenfalls effektive Ausführungsform ist eine Reihe von Zapfen oder Stiften, die quer zur flächigen Erstreckung des Flächenbeleuchtungskörpers durch Ösen entlang des Randes des Flächenbeleuchtungskörpers verlaufen. Die Zugaufnahmezapfen bzw. Stifte sind Teil des Gehäuses der Steuereinheit oder zumindest mit diesem fest verbunden.

Die elektrischen Leitungen zwischen der Steuereinheit und den Leuchtmitteln können durchgängig ausgestaltet sein, also ohne Unterbrechung sein und mit ihren jeweiligen Enden direkt an den entsprechenden Kontaktierungen der Steuereinheit und der Leuchtmitteln ankontaktiert, beispielsweise angelötet, sein. Alternativ können die elektrischen Leitungen eine Unterbrechung mit einer Kontaktierung aufweisen, die insbesondere im Bereich des Zugentlastungsmittels angeordnet sind, wobei die Kontaktierung insbesondere als Federstiftkontaktierung mit Federstiften und gegenüberliegenden Kontaktflächen ausgebildet ist, welche durch ein Befestigen des Zugentlastungsmittels kontaktiert und gesichert werden, oder als Stiftleiste mit Kontaktstiften, die in entsprechende Kontaktstiftaufnahmen aufnehmbar oder aufgenommen sind.

Eine Federstiftkontaktierung bietet auch unter mechanischer Belastung noch eine sichere elektrische Kontaktierung, weil die Federstifte etwas Spiel zur relativen Bewegung gegenüber ihren jeweiligen gegenüberliegenden Kontaktflächen haben. Da die Federstifte eine federvorbelastete Spitze aufweisen, können in begrenztem Umfang auch durch übermäßigen Zug bewirkte Spalte zwischen den zu kontaktierenden Teilen toleriert werden, ohne dass die elektrische Durchkontaktierung unterbrochen wird. Die Federstifte können auch als Federstiftleisten ausgebildet sein, die Kontaktflächen auch als Kontaktwannen.

Die Federstiftkontaktierung kann so ausgeführt sein, dass ein textiler Flächenbeleuchtungskörper im Bereich des Übergangs zur Steuereinheit eine Vorplatine aufweist, die die Kontaktflächen für die Federstifte sowie gegebenenfalls die Zugentlastungsmittel bereitstellt. Die Kontaktflächen und Federstifte können insbesondere jeweils zwischen den Zugentlastungsmitteln angeordnet sein, wobei die Zugentlastungsmittel ausgebildet sind, die Vorplatine und eine Platine der Steuereinheit aufeinanderzupressen. Dies sorgt für eine sichere Federstiftkontaktierung. Ein geeignetes Zugentlastungsmittel ist in diesem Fall eine Kombination aus Spacern mit Innengewinde auf einer der beiden Platinen und durchgängige Bohrungen oder Öffnungen für Schrauben, die in die Innengewinde der Spacer eingreifen. Die entsprechenden Öffnungen durchdringen gegebenenfalls mehrere oder alle Schichten des Flächenbeleuchtungskörpers.

Andere Zugentlastungsmittel können auch Nieten, SMD-Abstandhalter (als "Surface Mounted Device" ausgebildeter Abstandhalter) mit oder ohne Gewinde oder Bolzen zur Verbindung der Platinen sein. So kann in weiteren Ausführungsformen die Kontaktierung dergestalt ausgeführt sein, dass eine Vorplatine auf dem Textil auf ihrer Oberseite aufgebrachte SMD-Buchsen enthält, in die SMD-Stifte von der Hauptplatine aus eingeführt werden. Dies kann in vertikaler Anordnung der Platinen übereinander oder auch in horizontaler Ausführung nebeneinander erfolgen. Die mechanische Zugentlastung entspricht der zuvor beschriebenen. Die Zugentlastung kann allein oder zusätzlich zu den zuvor beschriebenen Beispielen von Zugentlastungen ausgeführt sein.

Eine Ausführung der Kontaktierung mit Stiftleiste mit Kontaktstiften, die in entsprechende Kontaktstiftaufnahmen aufnehmbar oder aufgenommen sind, ist eine einfache und kostengünstige Möglichkeit der Kontaktierung. Da es sich um eine Kontaktierung handelt, bei der die Kontaktstifte der Stiftleiste parallel liegen, muss die Kontaktierung in Richtung der Ausrichtung der Kontaktstifte belastet werden. Dies passiert in einer vorteilhaften Ausführung dadurch, dass die Stiftleiste in einer Abdeckung aufgenommen ist, die an oder auf das Gehäuse der Beleuchtungseinheit geschraubt oder geklemmt wird oder ist. Dafür verfügt das Gehäuse über eine entsprechende Kontaktleiste mit Kontaktstiftaufnahmen für die Kontaktstifte der Stiftleiste sowie für passende Schraub- oder Klemmstrukturen, die mit passenden Schraub- oder Klemmstrukturen an der Abdeckung zusammenwirken.

**In** weiteren Ausführungsformen kann die Zugentlastung derart ausgestaltet werden, dass eine Umhüllung des die Leuchtmittel tragenden, insbesondere textilen, Flächenbeleuchtungskörpers oder der Flächenbeleuchtungskörper selbst an seinen bzw. ihren Abschlusskanten zum Gehäuse hin Stoppleisten, insbesondere Kederleisten, Metallleisten oder Kunststoffleisten, mit insbesondere rundem, viereckigem, dreieckigem oder elliptischem Querschnitt, aufweisen, welche hinter einem aufgeschobenen Aufsatz bzw. Rahmen am Gehäuse fixiert werden. An den Flächenbeleuchtungskörper, insbesondere an Schichten, die den inneren textilen Schaltungsträger umhüllen, werden die Stoppleisten beispielsweise angenäht, angeklebt oder anlaminiert. Hierbei erfolgt eine Abdichtung gegen Wasser und Umwelteinflüsse auf dem, insbesondere laminierten oder beschichteten, inneren Modul mittels einer Klemmdichtung am Rand des eigentlichen Gehäuses so, dass das Gehäuse ein Einkammersystem wird.

Der Flächenbeleuchtungskörper verbleibt in Ausführungsformen mit Stoppleiste oder Stoppleisten vollständig oder größtenteils außerhalb des dann bereits wasserdichten Gehäuses, die Stoppleisten sind parallel zur Gehäusewand außerhalb des Gehäuses angeordnet. Nachfolgend wird ein Aufsatz bzw. Rahmen, beispielsweise aus Kunststoff, Metall oder anderen geeigneten Materialien mit einer Mittelaussparung, die durch eine obere und eine untere flexible Gummilippe optisch verschlossen sein kann, über den Flächenbeleuchtungskörper gezogen und mit dem Gehäuse verbunden. Der Aufsatz bzw. Rahmen ist dann so vor den Stoppleisten angeordnet, dass diese im Zwischenraum zwischen dem Gehäuse und dem Aufsatz bzw. Rahmen verbleiben und auch unter Zug nicht durch die Mittelaussparung des Rahmens hervortreten können. Dieser Aufsatz bzw. Rahmen kann mittels Verklemmungen und/oder Verschraubungen mit dem Gehäuse verbunden werden. Der Aufsatz bzw. Rahmen kann auch durch eine obere und eine untere Halbschale gebildet sein, die über die Stoppleisten greifen und diese gegenüber einem Herausziehen fixieren.

Der Flächenbeleuchtungskörper weist in Ausführungsformen an einer Rückseite des Schaltungsträgers eine flexible flächige Kühlschicht auf, die mit dem Schaltungsträger mechanisch oder stofflich verbunden ist, und/oder eine regen- und schmutzabweisende Schicht, wobei insbesondere die Kühlschicht nach außen durch die regen- und schmutzabweisende Schicht abgeschirmt oder als regen- und schmutzabweisende Schicht ausgebildet ist. Als regen- und schmutzabweisende Schicht eignet sich besonders ein Rip-Stop-Gewebe. Die Kühlschicht hat die Eigenschaft, dass die beim Betrieb der Leuchtmittel entstehende Abwärme besser abgeleitet wird, als wenn die Kühlschicht nicht vorhanden ist. Besonders geeignet sind Materialien mit erhöhter Wärmeleitfähigkeit, beispielsweise Gewebe, die metallische Fasern oder metallische Beschichtungen aufweisen, und entweder daraus bestehen oder eine Beimischung daraus aufweisen. Der Effekt ist besonders daran erkennbar, dass die Leuchtmittel, beispielsweiße LEDs, sich weniger stark aufheizen als im Fall ohne Kühlschicht.

In weiteren Ausführungsformen weist der Flächenbeleuchtungskörper an einer Vorderseite des Schaltungsträgers eine, insbesondere abnehmbare, Diffusionsschicht und/oder ein Richtgitter auf. Eine Diffusionsschicht, auch Diffusor genannt, ist ein Gewebe oder eine sonstige Schicht, die für eine Vergleichmäßigung der Beleuchtung sorgt und einen Teil der Intensität, die direkt an dem Ort der Leuchtmittel entsteht, in den Bereich zwischen den Leuchtmittel verteilt und gegebenenfalls eine gewisse Richtcharakteristik der abgestrahlten Beleuchtung formt, die sich von der ursprünglichen Richtcharakteristik der Leuchtmittel selbst unterscheiden kann. Dies kann zu einer weiteren Verteilung führen. Ein Richtgitter kann diese direktionale Verteilung wieder einengen, wobei insbesondere in Kombination mit der Diffusionsschicht eine sehr gleichmäßige und gleichzeitig gerichtete Beleuchtung erzielt wird. Zusätzlich oder alternativ kann auch eine Schicht aus Watte verwendet werden, insbesondere zwischen dem Diffusor und den Leuchtmitteln, welche neben einer Diffusionswirkung auch einen mechanischen Schutz bieten. Auch die Diffusionsschicht selber kann, wenn sie insbesondere watteähnlich aufgebaut ist, eine mechanische Schutzfunktion ausüben.

Eine solche Diffusionsschicht kann als dreidimensionales Abstandsgewirk, als Diffusionsfolie oder mehrere Diffusionsfolien oder als textiler Stoff ausgebildet sein, insbesondere aus transparenten oder semitransparenten Kunststofffasern, insbesondere als ein Gewebe aus PMMA-Fasern (Polymethylmethacrylat) mit mechanischer Oberflächenbehandlung und/oder polymeroptischen Fasern (POF). Bei POF handelt es sich um Lichtleitfasern auf Polymerbasis, wobei etwa PMMA, Polycarbonate, Polystyrole, Silikone, Polyethersulfone, Polysulfone oder Polyetherimide als Kernmaterial verwendet werden. Eine mechanische Oberflächenbehandlung, etwa eine abrasive Behandlung oder eine gezielte Anbringung von Fehlstellen, sorgt für Unebenheiten bzw. Fehlstellen in der Oberfläche, in die bzw. aus denen Licht ein- und austreten kann. Eine solche Diffusionsschicht zerstreut das Beleuchtungslicht noch mehr, als dies durch die flächige Anordnung der Leuchtmittel auf dem Schaltungsträger möglich ist und ist vor allem dann vorteilhaft, wenn die ohne Diffusionsschicht erreichte Gleichmäßigkeit der Beleuchtung noch nicht ausreicht, etwa bei kleinem Abstand zu den beleuchteten Objekten oder Szenen.

Die Effizienz der Beleuchtung wird erhöht, wenn der Schaltungsträger unterhalb der Leuchtmittel mit einer reflektierenden Oberfläche, insbesondere einer Aluminiumschicht, versehen ist. Dies kann eine eigene Schicht oder eine Beschichtung sein, beispielsweise eine vollständige oder partielle Metallbedampfung.

In Ausführungsformen, die besonders auf Witterungsbeständigkeit ausgelegt sind, ist der Schaltungsträger mit den Leuchtmitteln und den elektrischen Leitungen mit einer wasserdichten Beschichtung, insbesondere Silikon, beschichtet. Eine solche Beschichtung schützt auch vor dem Eindringen von Staub und Fremdkörpern und bietet eine mechanische Entlastung für die elektronischen Komponenten und Leitungen am Flächenbeleuchtungskörper und kann auch vor Kurzschlüssen schützen. Geeignet sind beispielsweise lufthärtende Silikone, wasserabweisende Lacke, Membranen, Laminierungen oder andere wasserabweisende Beschichtungen.

Das Gehäuse der Steuereinheit umfasst in Ausführungsformen an einer oder mehreren Öffnungen eine umlaufende Dichtung, die zur Verhinderung des Eindringens von Feuchtigkeit oder Flüssigkeiten ausgebildet ist oder sind. Eine solche Dichtung kann eine Neoprendichtung und/oder eine Silikondichtung sein, die durch Verpressen oder Verschrauben von Gehäusehälften abgedichtet wird. Dies gilt für alle Gehäuseöffnungen des Gehäuses der Steuereinheit. Eine Neoprendichtung ist beispielsweise besonders geeignet zur Abdichtung der Öffnung, durch die der Flächenbeleuchtungskörper in das Gehäuse hineingeführt wird, jedoch können auch andere Dichtungsmaterialen wie Silikon an dieser Stelle verwendet werden.

Weitere Einsatzmöglichkeiten erschließen sich, wenn ein versteifbarer Rahmen umfasst ist, der mit dem Flächenbeleuchtungskörper an dessen Umfang umlaufend oder an zwei oder mehreren Stellen verbunden oder verbindbar ist, wobei der Rahmen den Flächenbeleuchtungskörper im versteiften Zustand aufspannt und im entspannten Zustand ein Falten und/oder Einrollen des Flächenbeleuchtungskörpers zusammen mit dem versteifbaren Rahmen ermöglicht. Ein solcher Beleuchtungskörper benötigt nicht notwendigerweise eine externe Halterung oder eine Auflagefläche, sondern kann stehend eingesetzt werden, da der flexible Flächenbeleuchtungskörper durch den integrierten Rahmen in seinem versteiften Zustand gestützt wird. Dadurch wird auch das Aufstellen der Beleuchtungseinheit auf dem Boden ohne weitere Hilfsmittel möglich.

Zur Ausführung des versteifbaren Rahmens sind verschiedene Konzepte geeignet. In einigen Ausführungsformen umfasst der versteifbare Rahmen einen luft- oder fluiddichten aufblasbaren Schlauch, der mittels einer externen oder einer im Gehäuse der Steuereinheit integrierten Pumpe mit Luft oder einem Fluid befüllbar und wieder entleerbar ist. Ein solcher Schlauch ist entweder umlaufend oder an mehreren Punkten am Umfang des Flächenbeleuchtungskörpers befestigt und erhält auf diese Weise eine Begrenzung seiner Form im aufgepumpten Zustand. Er kann auch in den Flächenbeleuchtungskörper randläufig integriert sein.

In anderen Ausführungsformen umfasst der versteifbare Rahmen eine oder mehrere Abschnitte, in denen eine Spiralfeder oder eine Reihe miteinander fluchtender Rohre mit innenlaufenden Zugdrähten angeordnet ist, die an einer Seite mit einer Straffungsvorrichtung und an der anderen Seite mit einem Ende der Spirale oder der Reihe fluchtender Rohre verbunden sind, welche durch Zugbelastung der Zugdrähte versteifbar und durch Entlastung der Zugdrähte mittels einer in der Steuereinheit angeordneten Versteifungsvorrichtung in einen flexiblen Zustand versetzbar sind.

In verschiedenen Ausführungsformen weist der versteifbare Rahmen eine O-Form, eine X-Form oder eine U-Form auf.

Sofern der Rahmen an der Vorderseite des Flächenbeleuchtungskörpers angeordnet ist, kann die Oberfläche des Rahmens ausgebildet sein, mit weiteren Schichten verbunden zu werden, beispielsweise mit einer abnehmbaren Diffusionsschicht und/oder einem Richtgitter. Dies kann beispielsweise in Form eines Klettverschlusses realisiert werden.

In weiteren Ausführungsformen enthält der mit der Beleuchtungseinrichtung verbundene Rahmen einen auf porösen Nanostrukturen basierenden metallischen Werkstoff, der mit einer ionischen auf Spannung reagierenden Flüssigkeit durchsetzt ist. Durch Anlegen einer äußeren Spannung aus der Steuerungseinrichtung der Beleuchtungseinrichtung kann dieser Werkstoff reversibel in beliebigen Formen versteift werden. Ein solcher Werkstoff wurde beispielsweise in Hai-Jun Jin, Jörg Weissmüller, "A Material with Electrically Tunable Strength and Flow Stress", Science, Vol. 332, Issue 6034, S. 1179-1182 offenbart. So kann der Flächenbeleuchtungskörper beispielsweise ausgerollt werden, während das Rahmenmaterial weich ist. Sobald der Flächenbeleuchtungskörper in die gewünschte Form gebracht wurde, wird der Rahmen durch das Anlegen der äußeren Spannung versteift, so dass der Flächenbeleuchtungskörper die einmal eingenommene Form beibehält.

Zum Transport ist es günstig, wenn die Beleuchtungseinheit aufgewickelt wird und im aufgewickelten Zustand fixiert wird. In Ausführungsformen weist der Flächenbeleuchtungskörper dazu ein Fixiermittel zum lösbaren Fixieren eines der Steuereinheit gegenüberliegenden Endes des Flächenbeleuchtungskörpers an einer anderen Stelle des Gehäuses oder des Flächenbeleuchtungskörpers auf, das den Beleuchtungskörper in einem Zustand fixiert, in dem der Flächenbeleuchtungskörper um die Steuereinheit herumgewickelt ist. Ein solches Fixiermittel kann beispielsweise ein Druckknopf, ein Klettverschluss oder ein Magnet sein, der mit einem Gegenstück am Gehäuse oder an der Unterseite des Flächenbeleuchtungskörpers zusammenwirkt. Alternativ kann auch hier eine sich unter Spannung versteifende Technologien zum Einsatz kommen.

Zur Bedienung umfasst die Steuereinheit in Ausführungsformen, insbesondere wasserdichte, Bedienelemente, insbesondere eine Folientastatur, und/oder eine drahtlose Kommunikationsschnittstelle, über die die Steuereinheit mittels einer Fernbedienungseinheit oder ein mobiles Endgerät fernbedienbar ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische perspektivische Prinzipdarstellung einer Ausführungsform mit einer Zugentlastung,
- Fig. 2: eine schematische perspektivische Prinzipdarstellung einer Ausführungsform von außen,
- Fig. 3: eine schematische Querschnittsdarstellung einer Ausführungsform im eingewickelten Zustand,
- Fig. 4: eine schematische Darstellung eines Schichtaufbaus einer Ausführungsform,
- Fig. 5: eine schematische Detaildarstellung eines weiteren Schichtaufbaus,
- Fig. 6: eine schematische Darstellung der Bestandteile einer Steuereinheit einer Ausführungsform,
- Fig. 7: verschiedene Konfigurationen von integrierten versteifbaren Rahmen,
- Fig. 8: schematische Darstellungen einer weiteren Ausführungsform mit einer Zugentlastung,
- Fig. 9: eine schematische Draufsicht auf die Ausführungsform der Fig. 8,
- Fig. 10: schematische Darstellungen einer weiteren Ausführungsform mit einer Zugentlastung,
- Fig. 11: eine schematische Draufsicht auf die Ausführungsform der Fig. 10 und
- Fig. 12: eine schematische Querschnittsdarstellung der Ausführungsform der Fig. 10.

In den Zeichnungen sind jeweils gleiche oder gleichartige Elemente und/oder Teile mit denselben Bezugsziffern versehen, so dass von einer erneuten Vorstellung jeweils abgesehen wird.

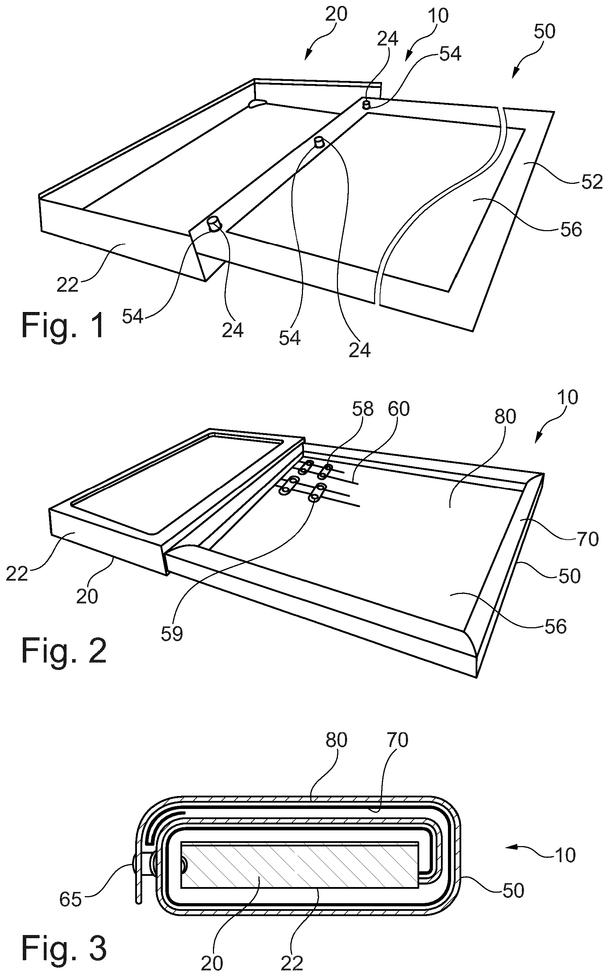

Fig. 1 stellt eine Ausführungsform einer erfindungsgemäßen Beleuchtungseinheit 10 schematisch perspektivisch dar. Die Beleuchtungseinheit 10 umfasst eine Steuereinheit 20, dessen Gehäuse 22 im geöffneten Zustand dargestellt ist, und ohne die darin angeordneten elektronischen Komponenten wie Platinen, Batterien, Schaltkreise, Steuerelektronik etc. Das Gehäuse 22 weist an einer Querseite drei Zugaufnahmezapfen 24 auf, die von einer unteren Fläche des Gehäuses 22 abstehen, und auf die ein Flächenbeleuchtungskörper 50 aufgesteckt ist, der hierfür an einem seiner Ränder drei Ösen 54 aufweist, also verstärkte Öffnungen, die für einen zugentlasteten Sitz des Flächenbeleuchtungskörpers 50 auf den Zugaufnahmezapfen 24 im Gehäuse 22 sorgen. Der Flächenbeleuchtungskörper 50 ist flexibel und flächig ausgestaltet und weist eine leuchtaktive Fläche 56 auf, die von einem Rand 52 umgeben ist, der nicht leuchtaktiv ist bzw. nicht leuchtaktiv sein muss.

Anstelle einer Zugentlastung durch die Zugaufnahmezapfen 24 und Ösen 54 kann auch eine nicht dargestellte Klemmeinrichtung verwendet werden, die den Flächenbeleuchtungskörper 50 entlang einem seiner Ränder 52 ergreift und eingeklemmt, gegebenenfalls mit einer gummierten Oberfläche oder mit einer profilierten Oberfläche. Die Klemmung erfolgt dann entlang der Seite, die in dem Ausführungsbeispiel der Fig. 1 die Ösen 54 aufweist.

Bei dem Ausführungsbeispiel in Fig. 2 ist eine perspektivische schematische Außendarstellung einer erfindungsgemäßen Beleuchtungseinheit 10 dargestellt, bei der das Gehäuse 22 der Steuereinheit 20 geschlossen ist. Aus dem Gehäuse 22 tritt der Flächenbeleuchtungskörper 50 aus, der in etwa die gleiche Breite aufweist wie das Gehäuse 22, und gegebenenfalls auch breiter oder schmaler sein kann. In der leuchtaktiven Fläche 56 sind beispielhaft elektrische Leitungen 60 und LED-Leuchtmittel 58 dargestellt, die tatsächlich die gesamte leuchtaktive Fläche 56 ausfüllen. Es ist angedeutet, dass die LEDs jeweils auf Platinen 59 angeordnet sind, die jeweils mittels zwei oder mehr Leitungen 60 verbunden sind, die zur Stromversorgung dienen. Es können pro Platine auch mehrere verschiedene LEDs mit verschiedenen Farben oder Farbtemperaturen eingesetzt werden, die individuell angesteuert werden, um die Farbtemperatur der Gesamtbeleuchtung einzustellen. Die Erfindung ist nicht auf die Auswahl von LEDs als Leuchtmitteln beschränkt.

Die LED-Leuchtmittel 58 und elektrischen Leitungen 60 sind auf einem Schaltungsträger 80 aufgebracht, das eine textile Basis haben kann, also beispielsweise auf einem textilen Tuch. Einzelheiten dazu sind in DE 10 2014 206 882 B4 beschrieben. Die elektrischen Leitungen und die Platinen 59 können mit dem textilen Tuch vernäht sein, sodass sich eine gleichzeitig sichere und belastungsarme Verbindung zwischen den elektrischen Komponenten und dem Schaltungsträger 80 ergibt. Die Beschaffenheit der Verbindung aus den elektrischen Komponenten mit dem textilen Schaltungsträger 80 ergibt eine Struktur, die einfach und wiederholt gerollt und gefaltet werden kann.

Der Rand des Flächenbeleuchtungskörpers 50 weist einen umlaufenden versteifbaren Rahmen 70 in O-Form auf. Es handelt sich um einen aufblasbaren Schlauch, der mit Druckluft oder einem anderen unter Druck setzbaren Hydraulikfluid gefüllt wird. Sobald der Schlauch mit Druckluft oder einem Hydraulikfluid gefüllt und unter Druck gesetzt wird, dehnt er sich zu den maximalen Dimensionen auf und stabilisiert so den Flächenbeleuchtungskörper 50. Der Schlauch kann entweder Teil des Flächenbeleuchtungskörpers 50 sein oder mit diesem umlaufend verbunden werden, beispielsweise mit einem Klettverschluss. Sobald die Druckluft oder das Hydraulikfluid abgelassen wird, kann der Flächenbeleuchtungskörper 50 zusammen mit seinem versteifbaren Rahmen 70 aufgerollt werden.

Fig. 3 zeigt schematisch eine Ausführungsform einer erfindungsgemäßen Beleuchtungseinheit 10 im eingerollten Zustand im Querschnitt. Der Flächenbeleuchtungskörper 50 mit dem integrierten Rahmen 70 und dem Schaltungsträger 80 ist eng um das Gehäuse 22 der Steuereinheit 20 gewickelt und an seinem Ende mittels eines Fixiermittels 65 so fixiert, dass er sich nicht von alleine wieder abwickelt. Das Fixiermittel 65 ist in diesem Ausgangsbeispiel ein Druckknopf. Es kann sich aber auch um einen Klettverschluss oder einen Magnetverschluss handeln. In diesem Zustand ist die Rückseite des Flächenbeleuchtungskörpers 50 nach außen gekehrt, die gegebenenfalls mit einem schmutz- und regenabweisenden Material geschützt ist, so dass die empfindlichen elektrischen und elektronischen Komponenten im Inneren gegen Schmutz und Wasser geschützt sind.

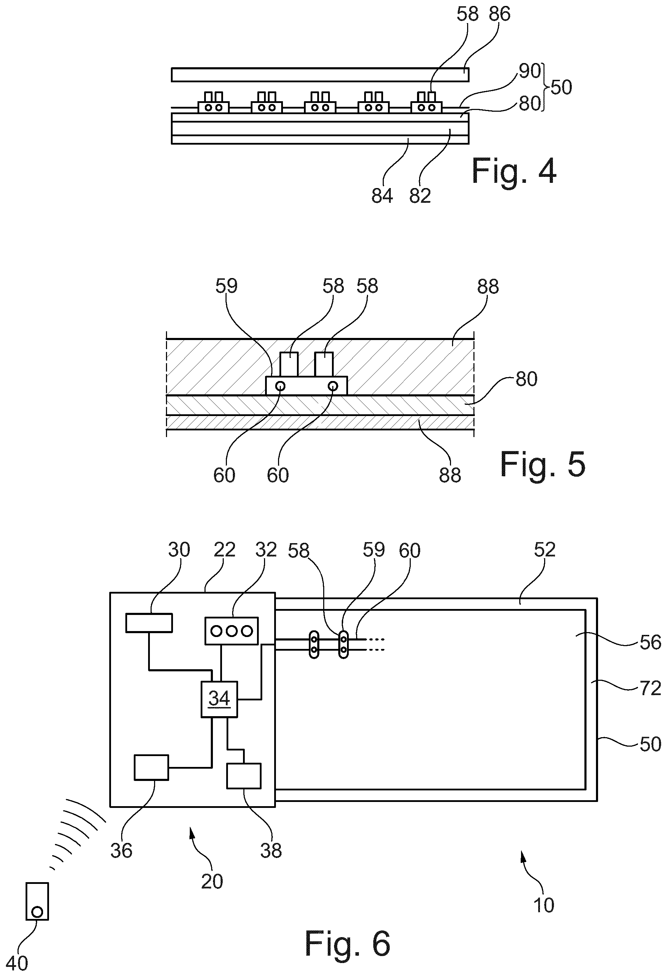

Fig. 4 stellt eine Schichtstruktur einer beispielhaften Ausführungsform eines Flächenbeleuchtungskörper 50 dar. Auf dem textilen Schaltungsträger 80 sind LED-Leuchtmittel 58 angeordnet, wobei auf den Flächen zwischen den LED-Leuchtmitteln 58 eine reflektierende Schicht 90 aufgebracht ist, alternativ kann anstelle der reflektierenden Schicht 90 auch eine mechanische Schutzschicht verwendet werden, beispielsweise in Form einer Kunststofffolie, die maskenartig Aussparungen an den Orten der LED-Leuchtmittel 58 hat und somit die Zwischenräume zwischen den LED-Leuchtmitteln 58 abdeckt und elektrisch isoliert. Diese Folie kann selbst auch metallbedampft sein und somit eine reflektierende Schicht 90 darstellen.

Auf der Rückseite des Schaltungsträgers 80 befindet sich eine Kühlschicht 82, die ausgebildet ist, Wärme von den LED-Leuchtmitteln 58 aufzunehmen und in die Fläche sowie zur Rückseite weiterzuleiten, wodurch die Temperatur der LED-Leuchtmittel 58 selbst gesenkt wird gegenüber einer Konfiguration, die keine Kühlschicht 82 aufweist. Auf der Rückseite der Kühlschicht 82 ist eine regen- und schmutzabweisende Schicht 84 angeordnet, die beispielsweise aus einem Rip-Stop-Gewebe gefertigt ist. Die regen- und schmutzabweisende Schicht 84 kann an der Kühlschicht 82 befestigt sein, kann aber auch nur randläufig mit den anderen Schichten verbunden sein, sodass ein Luftpolster zwischen der Kühlschicht 82 und der regen- und schmutzabweisenden Schicht 84 ausgebildet sein kann.

Auf der Vorderseite kann eine Diffusionsschicht 86 aus einem Diffusionsgewebe angeordnet sein, welches am Rand 52 des Flächenbeleuchtungskörper 50 mit dem Schaltungsträger 80 verbunden ist oder wird.

Fig. 5 zeigt einen Ausschnitt aus einem weiteren Ausgangsbeispiel, bei dem das Schaltungsträger 80 mit dem LED-Leuchtmittel 58 zusammen in einer wasserdichten Beschichtung 88, beispielsweise einer Silikonbeschichtung, eingefasst ist. Die Beschichtung 88 muss nicht, wie dargestellt, über die gesamte Fläche die gleiche Dicke haben, sondern kann auch im Bereich zwischen benachbarten LED-Leuchtmitteln 58 dünner sein als dargestellt. In dieser Darstellung ist außerdem ein Querschnitt durch ein LED-Leuchtmittel 58 mit Platinen 59 und elektrischen Leitungen 60 gezeigt, wobei die Querschnittrichtung quer zur Längserstreckung der elektrischen Leitungen 60 verläuft. Die elektrischen Leitungen 60 können auf dem Schaltungsträger 80 beispielsweise vernäht sein, wenn es sich dabei um einen textilen Träger handelt. Die beiden LEDs können verschiedene Farbtemperaturen oder Farben aufweisen. So kann eine LED ein warmes Weiß, die andere ein kaltes Weiß erzeugen. Es kann auch noch eine dritte LED (nicht dargestellt) umfasst sein, die eine Rotlicht-Beleuchtung erzeugt, wodurch die Adaption des menschlichen Auges an dunkle Umgebungen nicht gestört wird.

In Fig. 6 ist ein Beispiel für die elektrischen und elektronischen Komponenten in der Steuereinheit 20 schematisch dargestellt. Zentraler Bestandteil ist eine Steuerelektronik 34, die mit einer wiederaufladbaren oder nicht wiederaufladbaren Batterie 30 verbunden ist und gegebenenfalls eine Ladeelektronik für eine wiederaufladbare Batterie 30 umfasst. Weiterhin ist die Steuerelektronik 34 mit den LED-Leuchtmitteln 58 über die elektrischen Leitungen 60 verbunden und steuert diese an. Es ist eine Folientastatur 32 als Beispiel einer manuellen Eingabeschnittstelle vorhanden, mit der der Steuerelektronik 34 mitgeteilt wird, wie die LED-Leuchtmittel 58 angesteuert werden sollen.

Optional kann eine elektrische Pumpe 38 vorhanden sein, mit der auf Eingabe und Ansteuerung durch die Steuerelektronik 34 hin, ein U-förmiger umlaufender Rahmen 72 aufgepumpt wird, um den Flächenbeleuchtungskörper 50 in seiner Form zu stabilisieren. Außerdem kann eine drahtlose Kommunikationsschnittstelle 36 vorgesehen sein, die Signale von einer Fernbedienungseinheit 40 empfängt, decodiert und an die Steuerelektronik 34 weitergibt. Auf diese Weise lässt sich der Betrieb der Beleuchtungseinheit 10 fernsteuern.

Weitere mögliche Komponenten sind Taster, Anzeigeelemente, insbesondere LEDs oder Bildschirme, die ebenfalls wasser- und schmutzdicht in die Gehäuseoberfläche zu integrieren sind.

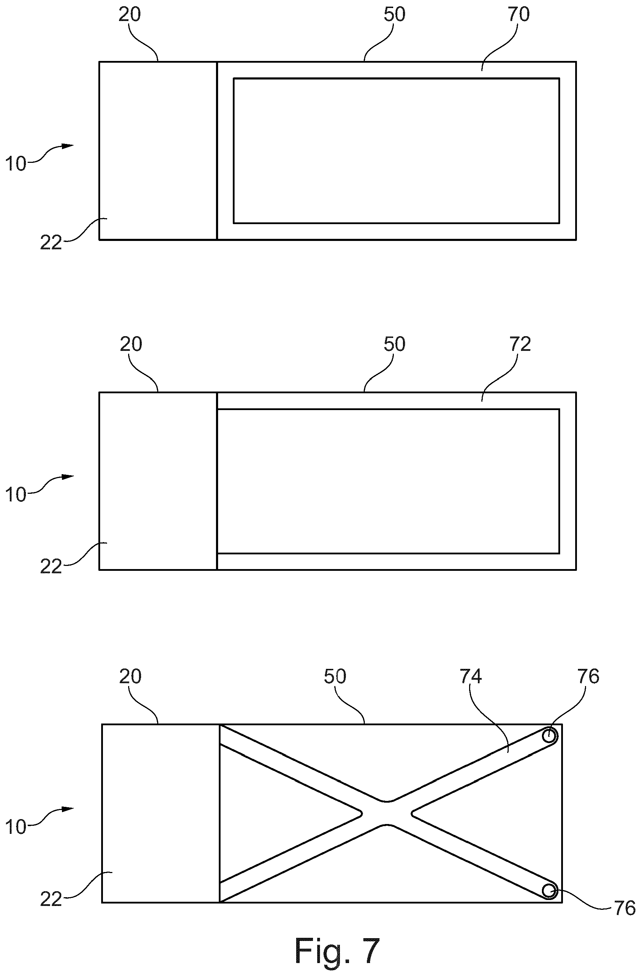

Die Fig. 7 zeigt drei Ausführungsbeispiele von verschiedenen Konfigurationen von versteifbaren Rahmen. Im obersten Teilbild handelt es sich um einen umlaufenden O-förmigen Rahmen 70, der entlang dem Rand des Flächenbeleuchtungskörpers 50 mit diesem verbunden ist und ihn im aufgepumpten Zustand aufspannt. Das zweite Teilbild zeigt eine sehr ähnliche Konfiguration mit einem U-förmigen umlaufenden Rahmen 72, welcher in ähnlicher Weise mit dem Flächenbeleuchtungskörper 50 entlang seines Randes verbunden ist und diesen im aufgepumpten Zustand aufspannt. Es können zusätzlich auch Querverstrebungen vorhanden sein, die einen in Bezug auf die langen Seiten nach außen gerichteten Druck ausüben, um den Flächenbeleuchtungskörper 50 zusätzlich in Form zu halten.

Ein drittes Ausführungsbeispiel ist im unteren Teilbild der Fig. 7 gezeigt, bei dem der Rahmen 74 eine X-Form aufweist. In diesem Fall ist der Rahmen an seinen Enden an den Befestigungsstellen 76 mit dem Flächenbeleuchtungskörper 50 an dessen der Steuereinheit 20 gegenüberliegenden Ecken verbunden und erhält seine Stabilität in Querrichtung durch die X-Form. Der X-förmige Rahmen 74 ist an der Rückseite des Flächenbeleuchtungskörpers 50 anzuordnen, während die O- und U-förmigen Rahmen 70, 72 wahlweise an der Vorderseite oder der Rückseite des Flächenbeleuchtungskörpers 50 angeordnet sein können.

Alle drei aufblasbaren Rahmen 70, 72, 74 können durch das Ablassen der Druckluft oder des Hydraulikfluid in einen schlaffen Zustand versetzt werden, in dem die Beleuchtungseinheit 10 von der Steuereinheit 20 her eingerollt werden kann.

Alternativ zu der Ausbildung der Rahmen 70, 72, 74 als druckluftbefüllbare Schläuche sind auch andere Ausführungsformen möglich. So können die Rahmen auch mit Spiralen gefüllt sein, durch die jeweils ein Zugdraht geführt ist, der an einer Seite mit dem Ende einer Spirale verbunden ist und innerhalb des Gehäuses 22 der Steuereinheit 20 mit einer Spannvorrichtung verbunden ist. Wenn die Spannvorrichtung betätigt wird, wird eine Zugspannung auf den Zugdraht gegeben, der die Spirale in eine eng aufliegende, unflexible Konfiguration zwingt und dadurch stabilisiert. Anstelle einer Spirale kann auch eine Reihe von zylindrischen Abschnitten dienen, durch die ein Zugdraht entsprechend geführt ist, und die sich bei Zugbelastung aufeinander zentrieren und gegenseitig abstützen und stabilisieren.

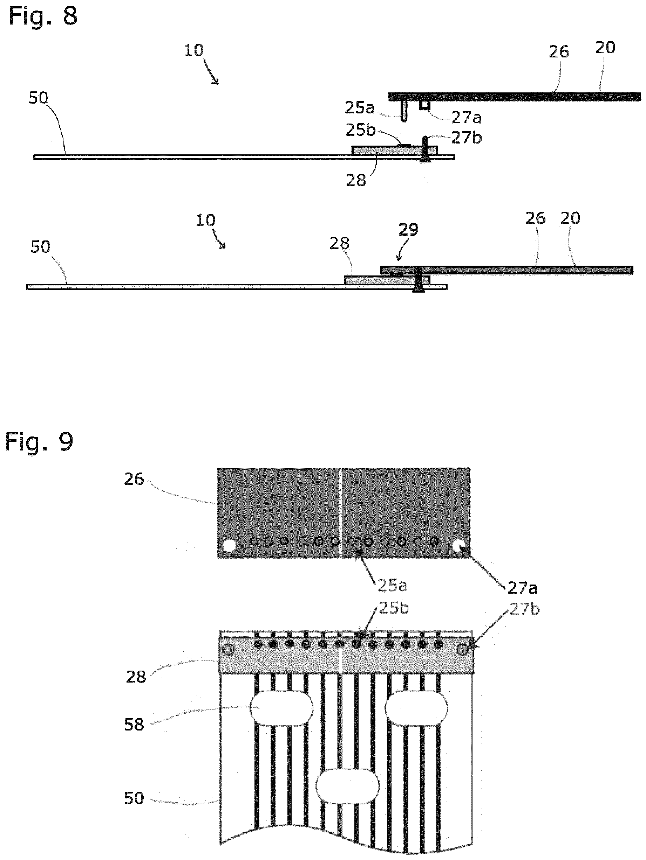

Die Figuren 8 und 9 zeigen schematisch eine weitere Ausführungsform einer Beleuchtungseinheit 10 mit einer Zugentlastung. Die Hauptplatine 26 der Steuereinheit 20 ist in der oberen Darstellung noch nicht mit dem textilen Flächenbeleuchtungskörper 50 verbunden. Die Hauptplatine 26 weist an ihrem Rand eine Reihe von Federstiften 25a auf, die zwischen zwei Spacern 27a mit Innengewinde angeordnet sind. Die Federstifte 25a können ihre Länge verändern, da die Spitzen längsaxial beweglich und federvorbelastet sind. Dies lässt sich in Fig. 8 erkennen, wo im unverbundenen Zustand (oben) die Federstifte 25a ihre vollständige Länge aufweisen und im zusammengesetzten Zustand (unten) unter der Klemmbelastung eingefahren sind.

Der Flächenbeleuchtungskörper 50 weist eine Vorplatine 28 auf, die flächig auf dem textilen Trägerstoff aufliegt und mit diesem verbunden ist. Die Vorplatine 28 weist durchgängige Öffnungen für Schrauben 27b auf, die so angeordnet sind, dass die Schrauben 27b im zusammengesetzten Zustand in die Innengewinde der Spacer 27a eingreifen. Beim Anziehen der Schrauben 27b wird die Vorplatine 28 auf die Hauptplatine 26 gepresst. Die Vorplatine 28 weist eine Reihe von Kontaktflächen 25b auf, die im zusammengesetzten Zustand von Haupt- und Vorplatine 26, 28 den Federstiften 25a gegenüberliegen. Sie stellen die elektrische Durchkontaktierung her. Die Kontaktflächen 25b sind auf der gegenüberliegenden Seite der Vorplatine 26 mit den Leitungen verbunden, beispielsweise verlötet, die zu den Leuchtmitteln 58 führen und diese mit Strom versorgen.

Die Anordnung der Reihen von Federstiften 25a bzw. Kontaktflächen 25b zwischen den Spacern 27a und Schrauben 27b erzeugt eine sehr effektive Zugentlastung und Kontaktierung 26. Die mechanischen Lasten werden von den Schrauben 27b und Spacern 27a aufgenommen. Die Federstift-Kontaktierung ist flexibel und erlaubt eine gewisse Verwindung der Kontaktierungsreihe, ohne die elektrische Kontaktierung zu verlieren.

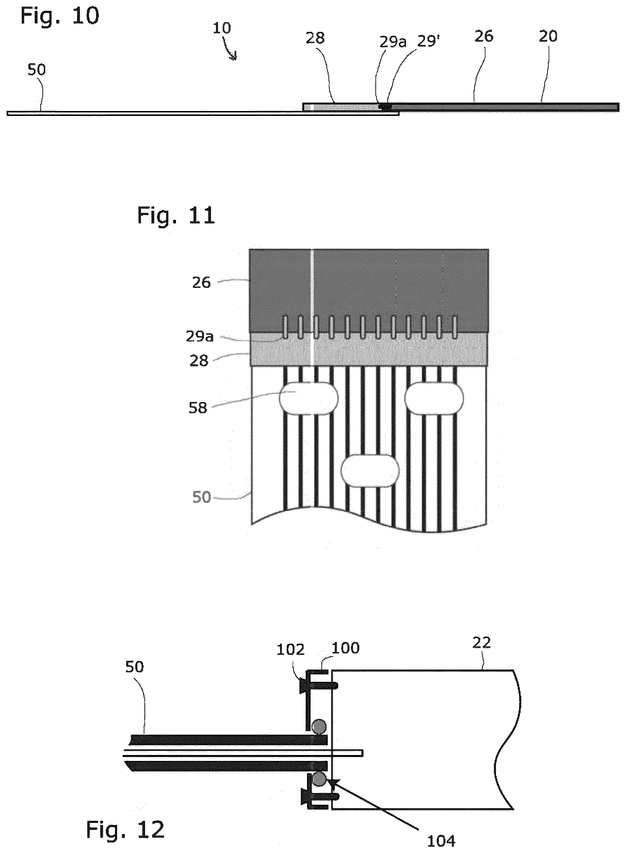

In Fig. 10 ist eine weitere Ausführungsform einer Zugentlastung gemäß der Erfindung schematisch dargestellt. Im Vergleich zu der Ausführungsform der Figuren 8 und 9 ist hauptsächlich die Art der Kontaktierung geändert. Der Flächenbeleuchtungskörper 50 ist wiederum mit einer Vorplatine 28 ausgestattet, die an ihrer Unterseite mit den elektrischen Leitungen auf dem Flächenbeleuchtungskörper 50 verbunden ist. Sie verfügt über eine Stiftleiste 29a mit parallel zueinander ausgerichteten Kontaktstiften. Die Hauptplatine 26 verfügt über entsprechende Kontaktaufnahmen zur Aufnahme der Kontaktstifte der Stiftleiste 29a. Dies ist in Fig. 11 in einer schematischen Draufsicht näher dargestellt.

Diese Kontaktierung 29' ist alleine mechanisch noch nicht stabil und würde unter Zug sofort wieder getrennt. Daher ist, wie in Fig. 12 im Querschnitt gezeigt, eine Abdeckung 100 bzw. ein Rahmen vorhanden, welcher in einer Öffnung das Ende des Flächenkörpers 50 aufnimmt und auf oder an das Gehäuse 22 angeschraubt wird bzw. ist. Die Hauptplatine 26 im Inneren des Gehäuses 22 ist in Fig. 12 aus Gründen der Übersichtlichkeit nicht eigens dargestellt.

Hinter der Vorplatine 28 ist der Flächenbeleuchtungskörper 50 an wenigstens einer Seite, in dem gezeigten Ausführungsbeispiel auf beiden Seiten, mit Stoppleisten 104 versehen, die angenäht, angeklebt o.ä. sein können. Diese verhindern, dass der Flächenbeleuchtungskörper 50 aus der Abdeckung 100 bzw. dem Rahmen wieder herausgezogen werden kann. Zusammen mit der Abdeckung 100 wirken sie als Zugentlastungsmittel. Die Abdeckung 100 kann auch mit Dichtlippen aus Gummi, Silikon oder anderen geeigneten Materialien ausgestattet sein, gegen die die Stoppleisten 104 gezogen bzw. gedrückt werden und die die Dichtungswirkung, die von den Stoppleisten 104 ausgeht, insbesondere wenn diese als Kederleisten ausgebildet sind, verstärken.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Beleuchtungseinheit
- 20: Steuereinheit
- 22: Gehäuse
- 24: Zugaufnahmezapfen
- 25a: Federstift
- 25b: Kontaktfläche
- 26: Hauptplatine
- 27a: Spacer mit Innengewinde
- 27b: Schraube
- 28: Vorplatine
- 29, 29': Kontaktierung
- 29a: Stiftleiste
- 30: Batterie
- 32: Folientastatur
- 34: Steuerelektronik
- 36: drahtlose Kommunikationsschnittstelle
- 38: Pumpe
- 40: Fernbedienungseinheit
- 50: Flächenbeleuchtungskörper
- 52: Rand
- 54: Öse
- 56: leuchtaktive Fläche
- 58: LED-Leuchtmittel
- 59: Platine
- 60: elektrische Leitungen
- 65: Fixiermittel
- 70: versteifbarer Rahmen in O-Form
- 72: versteifbarer Rahmen in U-Form
- 74: versteifbarer Rahmen in X-Form
- 76: Befestigungsstellen
- 80: Schaltungsträger
- 82: Kühlschicht
- 84: regen- und schmutzabweisende Schicht
- 86: Diffusionsschicht
- 88: wasserdichte Beschichtung
- 90: reflektierende Schicht
- 100: Abdeckung
- 102: Befestigung der Abdeckung am Gehäuse
- 104: Stoppleiste

## Patentansprüche

1. Beleuchtungseinheit (10), umfassend einen flexiblen Flächenbeleuchtungskörper (50), der eine flächig verteilte Mehrzahl von Leuchtmitteln (58) auf einem flächigen Trägermaterial aufweist, das einen, insbesondere textilbasierten, flexiblen flächigen Schaltungsträger (80) umfasst, der auf einer Vorderseite mit der Mehrzahl von Leuchtmitteln (58) bestückt ist, die durch im oder am Schaltungsträger (80) ausgebildete elektrische Leitungen (60) verschaltet sind, und eine Steuereinheit (20), die zur Stromversorgung und Steuerung der Mehrzahl von Leuchtmitteln (58) ausgebildet ist, wobei die Steuereinheit (20) ein Gehäuse (22) umfasst, das an einem Rand des Flächenbeleuchtungskörpers (50) angeordnet und mit diesem mechanisch verbunden ist, wobei der Rand des Flächenbeleuchtungskörpers (50) in dem Gehäuse (22) der Steuereinheit (20) abschnittsweise aufgenommen ist, wobei das Gehäuse (20) elektrische und elektronische Komponenten und Leitungen, die mit den elektrischen Leitungen (60) des Flächenbeleuchtungskörpers (50) verbunden sind, und ein Zugentlastungsmittel (24, 27a, 27b) umfasst, das Zugspannungen zwischen dem Gehäuse (22) der Steuereinheit (20) einerseits und dem Flächenbeleuchtungskörper (50) andererseits aufnimmt und von den elektrischen Verbindungen zwischen der Steuereinheit (20) und dem Flächenbeleuchtungskörper (50) fernhält, wobei das Zugentlastungsmittel (24, 27a, 27b) ausgebildet ist, eine zugfeste Verbindung zwischen dem Material des Flächenbeleuchtungskörpers (50) und dem Gehäuse (22) herzustellen, **dadurch gekennzeichnet, dass** das Zugentlastungsmittel (24, 27a, 27b) als Klemmeinrichtung, als Reihe von Zugaufnahmezapfen (24), die durch eine passend zur Anordnung der Zugaufnahmezapfen (24) ausgestaltete Reihe von Ösen (54) in dem Flächenbeleuchtungskörper (50) geführt sind, als Spacer (27a) mit Innengewinde und Schrauben (27b), die in die Innengewinde der Spacer (27a) eingeschraubt oder einschraubbar sind, oder als Abdeckung (100), die auf oder an das Gehäuse (22) angeschraubt oder anschraubbar bzw. angeklemmt oder anklemmbar ist, ausgebildet ist.

2. Beleuchtungseinheit (10) nach Anspruch 1, wobei das Zugentlastungsmittel mit einer am Flächenbeleuchtungskörper (50) angebrachten Stoppleiste (104) ausgebildet ist, die ausgebildet ist, ein Herausziehen des Flächenbeleuchtungskörpers (50) aus der Abdeckung zu verhindern.

3. Beleuchtungseinheit (10) nach Anspruch 1 oder 2, wobei das Trägermaterial im Bereich der Ösen (54) oder der Spacer (27a) verstärkt ausgeführt ist, insbesondere durch eine Doppellage des flexiblen flächigen Schaltungsträgers (80).

4. Beleuchtungseinheit (10) nach einem der Ansprüche 1 bis 3, **dadurch gekennzeichnet, dass** elektrische Leitungen zwischen der Steuereinheit (20) und den Leuchtmitteln (58) durchgängig ausgestaltet sind oder eine Unterbrechung mit einer Kontaktierung aufweisen, die insbesondere im Bereich des Zugentlastungsmittels (24, 27a, 27b) angeordnet sind, wobei die Kontaktierung insbesondere als Federstiftkontaktierung mit Federstiften und gegenüberliegenden Kontaktflächen ausgebildet ist, welche durch ein Befestigen des Zugentlastungsmittels kontaktiert und gesichert werden, oder als Stiftleiste (29a) mit Kontaktstiften, die in entsprechende Kontaktstiftaufnahmen aufnehmbar oder aufgenommen sind.

5. Beleuchtungseinheit (10) nach einem der Ansprüche 1 bis 4, **dadurch gekennzeichnet, dass** der Flächenbeleuchtungskörper (50) an einer Rückseite des Schaltungsträgers (80) eine flexible flächige Kühlschicht (82) aufweist, die mit dem Schaltungsträger (80) mechanisch oder stofflich verbunden ist, und/oder eine regen- und schmutzabweisende Schicht (84), wobei insbesondere die Kühlschicht (82) nach außen durch die regen- und schmutzabweisende Schicht (84) abgeschirmt ist oder als regen- und schmutzabweisende Schicht (84) ausgebildet ist.

6. Beleuchtungseinheit (10) nach einem der Ansprüche 1 bis 5, **dadurch gekennzeichnet, dass** der Flächenbeleuchtungskörper (50) an einer Vorderseite des Schaltungsträgers (80) eine, insbesondere abnehmbare, Diffusionsschicht (86) und/oder ein Richtgitter aufweist.

7. Beleuchtungseinheit (10) nach einem der Ansprüche 1 bis 6, **dadurch gekennzeichnet, dass** der Schaltungsträger (80) unterhalb der Leuchtmittel (58) mit einer reflektierenden Oberfläche, insbesondere einer Aluminiumschicht, versehen ist.

8. Beleuchtungseinheit (10) nach einem der Ansprüche 1 bis 7, **dadurch gekennzeichnet, dass** der Schaltungsträger (80) mit den Leuchtmitteln (58) und den elektrischen Leitungen (60) mit einer wasserdichten Beschichtung (88), insbesondere Silikon, beschichtet ist.

9. Beleuchtungseinheit (10) nach einem der Ansprüche 1 bis 8, **dadurch gekennzeichnet, dass** das Gehäuse (22) der Steuereinheit (20) an einer oder mehreren Öffnungen eine umlaufende Dichtung umfasst, die zur Verhinderung des Eindringens von Feuchtigkeit oder Flüssigkeiten ausgebildet ist oder sind.

10. Beleuchtungseinheit (10) nach einem der Ansprüche 1 bis 9, **dadurch gekennzeichnet, dass** ein versteifbarer Rahmen (70, 72, 74) umfasst ist, der mit dem Flächenbeleuchtungskörper (50) an dessen Umfang umlaufend oder an zwei oder mehreren Stellen (76) verbunden oder verbindbar ist, wobei der Rahmen (70, 72, 74) den Flächenbeleuchtungskörper (50) im versteiften Zustand aufspannt und im entspannten Zustand ein Falten und/oder Einrollen des Flächenbeleuchtungskörpers (50) zusammen mit dem versteifbaren Rahmen (70, 72, 74) ermöglicht.

11. Beleuchtungseinheit (10) nach Anspruch 10, **dadurch gekennzeichnet, dass** der versteifbare Rahmen (70, 72, 74) einen luft- oder fluiddichten aufblasbaren Schlauch umfasst, der mittels einer externen oder einer im Gehäuse (22) der Steuereinheit (20) integrierten Pumpe (38) mit Luft oder einem Fluid befüllbar und wieder entleerbar ist.

12. Beleuchtungseinheit (10) nach Anspruch 10 oder 11, **dadurch gekennzeichnet, dass** der versteifbare Rahmen (70, 72, 74) einen oder mehrere Abschnitte umfasst, in denen eine Spiralfeder oder eine Reihe miteinander fluchtender Rohre mit innenlaufenden Zugdrähten angeordnet ist, die an einer Seite mit einer Straffungsvorrichtung und an der anderen Seite mit einem Ende der Spirale oder der Reihe fluchtender Rohre verbunden sind, welche durch Zugbelastung der Zugdrähte versteifbar und durch Entlastung der Zugdrähte mittels einer in der Steuereinheit (20) angeordneten Versteifungsvorrichtung in einen flexiblen Zustand versetzbar sind.

13. Beleuchtungseinheit (10) nach einem der Ansprüche 10 bis 12, **dadurch gekennzeichnet, dass** der versteifbare Rahmen (70, 72, 74) eine O-Form, eine X-Form oder eine U-Form aufweist.

14. Beleuchtungseinheit (10) nach einem der Ansprüche 1 bis 13, **dadurch gekennzeichnet, dass** der Flächenbeleuchtungskörper (50) ein Fixiermittel (65) zum lösbaren Fixieren eines der Steuereinheit (20) gegenüberliegenden Endes des Flächenbeleuchtungskörpers (50) an einer anderen Stelle des Gehäuses (22) oder des Flächenbeleuchtungskörpers (50) aufweist, die den Beleuchtungskörper (10) in einem Zustand fixiert, in dem der Flächenbeleuchtungskörper (50) um die Steuereinheit (20) herum gewickelt ist.

15. Beleuchtungseinheit (10) nach einem der Ansprüche 1 bis 14, **dadurch gekennzeichnet, dass** die Steuereinheit (20), insbesondere wasserdichte, Bedienelemente, insbesondere eine Folientastatur (32), umfasst und/oder eine drahtlose Kommunikationsschnittstelle (36) umfasst, über die die Steuereinheit (20) mittels einer Fernbedienungseinheit (40) oder ein mobiles Endgerät fernbedienbar ist.

## Claims

1. A lighting unit (10), comprising a flexible surface-lighting element (50), which has a plurality of illuminants (58) distributed over the surface of a planar carrier material, which carrier material comprises a flexible planar circuit carrier (80) which is in particular textile-based and which is fitted with the plurality of illuminants (58) on a front side, the illuminants being interconnected by electrical lines (60) configured in or on the circuit carrier (80), and a control unit (20) which is configured to supply power to and to control the plurality of illuminants (58), wherein the control unit (20) comprises a housing (22) which is arranged on an edge of the surface-lighting element (50) and is mechanically connected thereto, the edge of the surface-lighting element (50) being partly received in the housing (22) of the control unit (20), wherein the housing (20) comprises electrical and electronic components and lines which are connected to the electrical lines (60) of the surface-lighting element (50), and a strain relief means (24, 27a, 27b) which absorbs tensile stresses between the housing (22) of the control unit (20), on the one hand, and the surface-lighting element (50), on the other hand, and keeps said tensile stresses away from the electrical connections between the control unit (20) and the surface-lighting element (50), wherein the strain relief means (24, 27a, 27b) is configured to create a tension-resistant connection between the material of the surface-lighting element (50) and the housing (22), **characterized in that** the strain relief means (24, 27a, 27b) is configured as a clamping device, as a series of tension load-receiving pegs (24) which are guided through a series of eyelets (54) in the surface-lighting element (50) designed to match the arrangement of the tension load-receiving pegs (24), as spacers (27a) with internal threads and screws (27b) which are screwed or can be screwed into the internal threads of the spacers (27a), or as a cover (100) which is screwed or can be screwed or, respectively is clamped or can be clamped to or onto the housing (22).

2. The lighting unit (10) according to Claim 1, wherein the strain relief means is configured with a stop bar (104) attached to the surface-lighting element (50), which stop bar is configured to prevent the surface-lighting element (50) from being pulled out of the cover.

3. The lighting unit (10) according to Claim 1 or 2, wherein the carrier material is reinforced in the region of the eyelets (54) or the spacers (27a), in particular by a double layer of the flexible planar circuit carrier (80).

4. The lighting unit (10) according to any one of Claims 1 to 3, **characterized in that** electrical lines between the control unit (20) and the illuminants (58) are designed to be continuous or have an interruption with a contact arrangement, which are in particular arranged in the region of the strain relief means (24, 27a, 27b), wherein the contact arrangement is configured in particular as a spring-loaded pin contact with spring pins and opposing contact surfaces which are contacted and secured by fastening of the strain relief means, or as a pin header (29a) with contact pins which can be received or are received in corresponding contact pin receptacles.

5. The lighting unit (10) according to any one of Claims 1 to 4, **characterized in that** the surface-lighting element (50) has, on a rear side of the circuit carrier (80), a flexible planar cooling layer (82) which is mechanically or material-bonded to the circuit carrier (80), and/or a rain- and dirt-repellent layer (84), wherein in particular the cooling layer (82) is shielded externally by the rain- and dirt-repellent layer (84) or is configured as a rain- and dirt-repellent layer (84).

6. The lighting unit (10) according to any one of Claims 1 to 5, **characterized in that** the surface-lighting element (50) has, on a front side of the circuit carrier (80), a diffusion layer (86) which is in particular removable, and/or a directional grating.

7. The lighting unit (10) according to any one of Claims 1 to 6, **characterized in that** the circuit carrier (80) is equipped, below the illuminants (58), with a reflective surface, in particular an aluminum layer.

8. The lighting unit (10) according to any one of Claims 1 to 7, **characterized in that** the circuit carrier (80) with the illuminants (58) and the electrical lines (60) is coated with a waterproof coating (88), in particular silicone.

9. The lighting unit (10) according to any one of Claims 1 to 8, **characterized in that** the housing (22) of the control unit (20) comprises a circumferential seal at one or more openings which is or are configured to prevent the penetration of moisture or fluids.

10. The lighting unit (10) according to any one of Claims 1 to 9, **characterized in that** a stiffenable frame (70, 72, 74) is comprised, which is or can be circumferentially connected to the surface-lighting element (50) at the perimeter thereof or at two or more points (76), the frame (70, 72, 74) stretching the surface-lighting element (50) in the stiffened state and making it possible for the surface-lighting element (50) to be folded and/or rolled up together with the stiffenable frame (70, 72, 74) in the unstiffened state.

11. The lighting unit (10) according to Claim 10, **characterized in that** the stiffenable frame (70, 72, 74) comprises an air- or fluid-tight inflatable tube which can be filled with air or a fluid and which can be deflated again by means of an external pump (38) or a pump (38) integrated into the housing (22) of the control unit (20).

12. The lighting unit (10) according to Claim 10 or 11, **characterized in that** the stiffenable frame (70, 72, 74) comprises one or more sections in which a coil spring or a series of aligned tubes having internal tension wires is arranged, the tension wires being connected on one side to a tightening device and on the other side to one end of the coil or the series of aligned tubes, the arrangement being stiffenable by tensioning the tension wires and being transferable into a flexible state by relieving tension on the tension wires by means of a stiffening device arranged in the control unit (20).

13. The lighting unit (10) according to any one of Claims 10 to 12, **characterized in that** the stiffenable frame (70, 72, 74) has an O-shape, an X-shape or a U-shape.

14. The lighting unit (10) according to any one of Claims 1 to 13, **characterized in that** the surface-lighting element (50) has a fixing means (65) for detachably fixing an end of the surface-lighting element (50) opposite the control unit (20) to another point of the housing (22) or of the surface-lighting element (50), which fixing means fixes the lighting element (10) in a state in which the surface-lighting element (50) is wound around the control unit (20).

15. The lighting unit (10) according to any one of Claims 1 to 14, **characterized in that** the control unit (20) comprises operating elements which are in particular waterproof, in particular a membrane keypad (32), and/or a wireless communication interface (36) via which the control unit (20) can be operated remotely by means of a remote-control unit (40) or a mobile terminal.

## Revendications

1. Unité d'éclairage (10) comprenant un corps d'éclairage (50) plat flexible, qui présente une pluralité de sources de lumière (58) réparties sur toute la surface d'un matériau de support plat, lequel comprend un support de circuit (80) plat flexible, notamment à base de textile, qui est équipé sur une face avant de la pluralité de sources de lumière (58) reliées entre elles par des conducteurs électriques (60) formés dans ou sur le support de circuit (80), et une unité de commande (20), conçue pour l'alimentation électrique et la commande de la pluralité de sources de lumière (58), l'unité de commande (20) comprenant un boîtier (22) qui est agencé sur un bord du corps d'éclairage plat (50) et relié mécaniquement à celui-ci, le bord du corps d'éclairage plat (50) étant partiellement reçu dans le boîtier (22) de l'unité de commande (20), le boîtier (22) comprenant des composants et conducteurs électriques et électroniques, qui sont reliés aux conducteurs électriques (60) du corps d'éclairage plat (50), et des moyens (24, 27a, 27b) de décharge de traction, qui absorbent les tensions de traction entre, d'une part, le boîtier (22) de l'unité de commande (20) et, d'autre part, le corps d'éclairage plat (50), et les maintiennent à l'écart des connexions électriques entre l'unité de commande (20) et le corps d'éclairage plat (50), les moyens (24, 27a, 27b) de décharge de traction étant conçus de manière à établir une liaison résistante à la traction entre le matériau du corps d'éclairage plat (50) et le boîtier (22), **caractérisée en ce que** les moyens (24, 27a, 27b) de décharge de traction se présentent sous la forme d'un dispositif de serrage, d'une série de tenons de retenue de traction (24) guidés à travers une série d'œillets (54) dans le corps d'éclairage plat (50), conçus de manière correspondante à la disposition des tenons de retenue de traction (24), d'entretoises (27a) à filetages intérieurs et de vis (27b) qui sont vissées ou sont aptes à être vissées dans les filetages intérieurs des entretoises (27a), ou d'un couvercle (100) qui est vissé ou est apte à être vissé sur ou contre le boîtier (22) ou qui est serré ou est apte à être serré contre celui-ci.

2. Unité d'éclairage (10) selon la revendication 1, dans laquelle les moyens de décharge de traction sont constitués par une barre d'arrêt (104) fixée au corps d'éclairage plat (50), qui est conçue pour empêcher le retrait du corps d'éclairage plat (50) hors du couvercle.

3. Unité d'éclairage (10) selon la revendication 1 ou la revendication 2, dans laquelle le matériau de support est renforcé au niveau des œillets (54) ou des entretoises (27a), en particulier par une double couche du support de circuit (80) plat flexible.

4. Unité d'éclairage (10) selon l'une des revendications 1 à 3, **caractérisée en ce que** les conducteurs électriques entre l'unité de commande (20) et les sources de lumière (58) sont continus ou présentent une interruption avec une mise en contact, qui est notamment aménagée dans la zone des moyens (24, 27a, 27b) de décharge de traction, la mise en contact étant notamment réalisée sous la forme d'un contact à broches à ressort, avec des broches à ressort et des surfaces de contact correspondantes, qui sont mises en contact et fixées par la fixation des moyens de décharge de traction, ou sous la forme d'un connecteur mâle (29a) avec des broches de contact aptes à être reçues ou reçues dans des logements de broches de contact correspondants.

5. Unité d'éclairage (10) selon l'une des revendications 1 à 4, **caractérisée en ce que** le corps d'éclairage plat (50) présente, sur une face arrière du support de circuit (80), une couche de refroidissement (82) plane flexible, qui est reliée au support de circuit (80) mécaniquement ou par matériau, et/ou une couche hydrofuge et anti-salissures (84), la couche de refroidissement (82) étant notamment protégée vers l'extérieur par la couche hydrofuge et anti-salissures (84) ou étant elle-même conçue en tant que couche hydrofuge et anti-salissures (84).

6. Unité d'éclairage (10) selon l'une des revendications 1 à 5, **caractérisée en ce que** le corps d'éclairage plat (50) comprend, sur une face avant du support de circuit (80), une couche de diffusion (86), en particulier amovible, et/ou une grille de diffusion.

7. Unité d'éclairage (10) selon l'une des revendications 1 à 6, **caractérisée en ce que** le support de circuit (80) est muni, sous les sources de lumière (58), d'une surface réfléchissante, en particulier d'une couche d'aluminium.

8. Unité d'éclairage (10) selon l'une des revendications 1 à 7, **caractérisée en ce que** le support de circuit (80) avec les sources de lumière (58) et les conducteurs électriques (60) est recouvert d'un revêtement étanche (88), en particulier du silicone.

9. Unité d'éclairage (10) selon l'une des revendications 1 à 8, **caractérisée en ce que** le boîtier (22) de l'unité de commande (20) comprend, au niveau d'une ou de plusieurs ouvertures, un joint périphérique conçu pour empêcher la pénétration d'humidité ou de liquides.

10. Unité d'éclairage (10) selon l'une des revendications 1 à 9, **caractérisée en ce qu'**elle comprend une structure rigidifiable (70, 72, 74) qui est reliée ou apte à être reliée au corps d'éclairage plat (50) sur son pourtour ou en deux ou plusieurs points (76), la structure (70, 72, 74) tendant le corps d'éclairage plat (50) à l'état rigidifié, et, à l'état détendu, permettant un pliage et/ou un enroulement du corps d'éclairage plat (50) avec la structure rigidifiable (70, 72, 74).

11. Unité d'éclairage (10) selon la revendication 10, **caractérisée en ce que** la structure rigidifiable (70, 72, 74) comprend un tube gonflable étanche à l'air ou aux fluides, qui est apte à être rempli d'air ou d'un fluide, et vidé, au moyen d'une pompe (38) externe ou intégrée dans le boîtier (22) de l'unité de commande (20).

12. Unité d'éclairage (10) selon la revendication 10 ou la revendication 11, **caractérisée en ce que** la structure rigidifiable (70, 72, 74) comprend un ou plusieurs segments dans lesquels est agencé un ressort hélicoïdal ou une série de tubes alignés les uns par rapport aux autres, présentant des fils de traction à l'intérieur d'eux, qui sont reliés d'un côté à un dispositif de tension et de l'autre côté à une extrémité du ressort hélicoïdal ou de la série de tubes alignés, lesquels sont aptes à être rigidifiés par une contrainte de traction exercée sur les fils de traction, et sont aptes à être ramenés à un état flexible par le relâchement des fils de traction au moyen d'un dispositif de rigidification agencé dans l'unité de commande (20).

13. Unité d'éclairage (10) selon l'une des revendications 10 à 12, **caractérisée en ce que** la structure rigidifiable (70, 72, 74) présente une forme en O, une forme en X ou une forme en U.

14. Unité d'éclairage (10) selon l'une des revendications 1 à 13, **caractérisée en ce que** le corps d'éclairage plat (50) présente un moyen de fixation (65) pour fixer de manière amovible l'une des extrémités du corps d'éclairage plat (50) opposée à l'unité de commande (20) à un autre emplacement du boîtier (22) ou du corps d'éclairage plat (50), qui fixe l'unité d'éclairage (10) dans un état dans lequel le corps d'éclairage plat (50) est enroulé autour de l'unité de commande (20).

15. Unité d'éclairage (10) selon l'une des revendications 1 à 14, **caractérisée en ce que** l'unité de commande (20) comprend des éléments de commande, en particulier étanches, notamment un clavier à membrane (32), et/ou comprend une interface de communication sans fil (36) par l'intermédiaire de laquelle l'unité de commande (20) est apte à être commandée à distance au moyen d'une télécommande (40) ou d'un terminal mobile.
